# EUROPÄISCHE PATENTSCHRIFT

(11) **EP 2 801 076 B1**
(45) Veröffentlichungstag und Bekanntmachung des Hinweises auf die Patenterteilung: **11.01.2017**
(21) Anmeldenummer: 12806361.7
(22) Anmeldetag: 26.11.2012
(51) Int. Cl.: G06T 7/00

(54) **TIEFENBILDBERECHNUNG MIT EINER MONOKAMERA DURCH EINE DEFINIERTE TRAJEKTORIE**
DEPTH IMAGE CALCULATION USING A MONO CAMERA BY WAY OF A DEFINED TRAJECTORY
CALCUL DE PROFONDEUR D'IMAGE AU MOYEN D'UNE CAMÉRA UNIQUE EN UTILISANT UNE TRAJECTOIRE DÉFINIE

(30) Priorität: 05.01.2012 DE 102012200127
(43) Veröffentlichungstag der Anmeldung: 12.11.2014
(73) Patentinhaber: Robert Bosch GmbH, 70442 Stuttgart (DE)
(72) Erfinder: RAISCH, Florian, 71116 Gaertringen (DE); MUEHLMANN, Karsten, 70499 Stuttgart (DE); VEPA, Leo, 89079 Ulm (DE)
(86) Internationale Anmeldenummer: PCT/EP2012/073618
(87) Internationale Veröffentlichungsnummer: WO 2013/102518

(56) Entgegenhaltungen:
- US-B1- 6 535 114
- ANTHONY LEWIS M: "Visual navigation in a robot using zig-zag behavior", ADVANCES IN NEURAL INFORMATION PROCESSING SYSTEMS 10,, 1. Januar 1997 (1997-01-01), Seiten 822-828, XP009167190,
- BOLLES R C ET AL: "EPIPOLAR-PLANE IMAGE ANALYSIS: AN APPROACH TO DETERMINING STRUCTUREFROM MOTION", INTERNATIONAL JOURNAL OF COMPUTER VISION, DORDRECHT, NL, 1. Januar 1987 (1987-01-01), Seiten 7-55, XP000572465, DOI: 10.1007/BF00128525

## Beschreibung

### Stand der Technik

Die vorliegende Erfindung betrifft ein Verfahren zur Gewinnung von Tiefeninformationen durch eine einzelne Kamera, die in einem Fahrzeug verbaut ist. Weiterhin betrifft die Erfindung ein Fahrzeug, das zur Durchführung dieses Verfahrens geeignet ist.

In modernen Fahrzeugen sind Fahrerassistenzsysteme weit verbreitet. Viele dieser Assistenzsysteme benötigen ein dreidimensionales Bild der Umgebung des Kraftfahrzeugs (z.B. Hinderniserkennung für einen Bremsassistenten, Abstandhalteassistent). Solche dreidimensionalen Modelle werden zumeist mit Stereokameras (Disparitätsschätzung) oder einer Monokamera und dem structure-from-motion-Verfahren gewonnen. Dazu nimmt eine Kamera zum Zeitpunkt t ein Bild der Umgebung auf. Anschließend werden Bildfeatures daraus extrahiert. Zu einem anderen Zeitpunkt t+1 nimmt die Kamera ein weiteres Bild der Umgebung auf. Auf diesem Bild werden ebenfalls Featurepunkte extrahiert. Anschließend wird versucht die gefunden Features im zum Zeitpunkt t aufgenommenen Bild auch im zum Zeitpunkt t+1 aufgenommenen Bild zu finden. Dann kann mit Hilfe der bekannten Kamerabewegung von t nach t+1 eine Triangulation durchgeführt werden und so für die Featurepunkte, welche in beiden Bildern vorhanden waren eine 3D-Position berechnet werden. Bei entsprechender Anzahl an Featurepunkten wird somit ein dreidimensionales Modell der Umgebung rekonstruiert.

Vorteilhaft ist dieses Verfahren vor allem bei Kraftfahrzeugen, da hier durch die Eigenbewegung des Fahrzeugs eine fest verbaute Kamera ebenfalls bewegt wird. Da die Geschwindigkeit und der Lenkradwinkel des Fahrzeugs bekannt ist, ist auch der von der Kamera zurückgelegte Weg zwischen zwei aufgenommenen Einzelbildern bekannt. Alternativ sind aus dem Stand der Technik Verfahren bekannt, um aus der aufgenommenen Bildfolge die Kamerabewegung zu bestimmen. Aus mindestens zwei Bildern erhält man somit eine Basis für die Berechnung eines dreidimensionalen Modells der Umgebung.

Ein Nachteil dieses Verfahrens ist jedoch, dass die Blickrichtung der Kamera gleich ihrer Bewegungsrichtung ist. Werden zwei an unterschiedlichen Positionen aufgenommene Einzelbilder der Umgebung verglichen, so wird festgestellt, dass sich der Blickwinkel bei Objekten am Rand des Bildes deutlich, bei Objekten in der Bildmitte jedoch kaum ändert. Daher ist eine Tiefenberechnung in der Mitte des Bildes sehr ungenau. Jedoch ist es erstrebenswert, vor allem hier qualitativ hochwertige Tiefeninformationen zu erhalten, um Objekte direkt vor dem eigenen Fahrzeug zuverlässig erkennen zu können.

Einen Versuch, dieses Problem zu lösen, bietet die DE 10 2006 039 104 A1 an. Diese Druckschrift offenbart ein Verfahren zur Entfernungsmessung unter Verwendung einer Monokamera. Nach dem oben genannten Prinzip wird ein dreidimensionales Modell der Umgebung berechnet, das jedoch vor allem in der Mitte sehr ungenaue Tiefeninformationen aufweist. Daher wird zur Verbesserung der Qualität der Daten in der Bildmitte ein weiteres Sensorsignal hinzugezogen. Dieses Signal kann z.B. von einem Radarsensor geliefert werden, der den Abstand zu Objekten vor dem Fahrzeug präzise bestimmen und in die Berechnung des dreidimensionalen Umgebungsmodells einfließen lassen kann.

Ebenfalls durch Translation einer Kamera in deren Blickrichtung werden in der DE 195 39 470 A1 Tiefeninformationen gewonnen. Auch hier ist das Problem bekannt, dass Tiefeninformationen in der Mitte des aufgenommenen Bildes eine sehr geringe Güte aufweisen. Dieses Problem wird jedoch nicht gelöst, der Benutzer wird vielmehr darauf hingewiesen, zu vermessende Objekte nicht in der Bildmitte zu platzieren, sondern an den Rand des Bildbereichs zu verschieben. Die Lehre der beiden Druckschriften kann daher nicht bei einem Fahrzeug mit Kamera ohne zusätzliche Sensoren angewandt werden, um die Qualität des berechneten Tiefenmodells der Umgebung zu verbessern.

Schließlich ist ein Verfahren gemäß dem Oberbegriff des Anspruches 1 aus folgender Veröffentlichung bekannt: Anthony Lewis M: "Visual navigation in a robot using Zig-Zag behaviour", advances in neural information processing systems 10, 1. Januar 1997, Seiten 822-828.

### Offenbarung der Erfindung

Das erfindungsgemäße Verfahren nach Anspruch 1 ermöglicht die Verwendung einer Kamera in einem KFZ ohne weitere vorausblickende Sensorik, um qualitativ hochwertige dreidimensionale Modelle der Umgebung zu erzeugen. Die Punkte der Trajektorie, der das Fahrzeug folgt, an denen Bilder aufgenommen werden sind eindeutig festgelegt. Daher wird der Blickwinkel auf die Umgebung von den Aufnahmepunkten aus erfindungsgemäß durch die Trajektorie bestimmt, so dass durch eine fahrzeugspezifische Optimierung der Trajektorie die Güte der gewonnenen Tiefeninformationen verbessert werden. Die Trajektorie ist dabei bevorzugt ein Kompromiss aus Fahrdynamik und dem Anfahren von Aufnahmepunkten mit größtmöglicher Veränderung des Blickwinkels auf die Umgebung. Dazu wird bevorzugt eine Trajektorie ausgewählt, die eine Querbewegung des Fahrzeuges und damit auch der Kamera erzeugt.

Die der Vorwärtsbewegung bevorzugt überlagerte Querbewegung der Kamera ermöglicht es, die Umgebung aus seitlich versetzten Positionen aufzunehmen. Damit wird der Blickwinkel von in der Bildmitte befindlichen Objekten stärker verändert, als dies bei reiner Vorwärtsbewegung der Fall wäre. Somit steigt die Qualität der gewonnenen Tiefeninformationen deutlich an.

Ein Fahrzeug mit einer Kamera und einer Berechnungseinheit zum Generieren von Tiefenbildern ist Gegenstand des nebengeordneten Anspruchs 6.

Die Unteransprüche zeigen bevorzugte Weiterbildungen der Erfindung.

In einer vorteilhaften Weise wird das erfindungsgemäße Verfahren von einem Fahrzeug angewandt, das autonom der vorgegebenen Trajektorie folgen kann. Bei Assistenzsystemen mit autonem Fahrbetrieb des KFZ, wie z.B. einem automatischen Garagenparker, muss die Sensorik des Fahrzeugs ein qualitativ hochwertiges Bild der Umgebung liefern, da die Rückmeldung des Fahrers fehlt. Ein autonomer Fahrbetrieb nach dem erfindungsgemäßen Verfahren hilft daher, Kollisionen zu vermeiden.

Bevorzugt weist die zu fahrende Trajektorie die Form einer Sinuskurve auf. Diese ist durch entsprechende Lenkung des Fahrzeugs sehr einfach zu realisieren. Alternativ kann die zu fahrende Trajektorie auch die Form einer S-Kurve aufweisen.

Ebenfalls bevorzugt nimmt die Kamera an den Extrempunkten der Trajektorie die Bilder der Umgebung auf. Wird beispielsweise eine sinusförmige Trajektorie gefahren, so weisen die Extrempunkte der Sinuskurve den größten seitlichen Abstand voneinander auf, so dass bei Aufnahme von Bildern der Umgebung in diesen Punkten die größtmögliche Änderung des Blickwinkels realisiert wird. Weiterhin ist der Ort dieser Punkte genau definiert, da ein Extrempunkt durch das beginnende Einschlagen der Lenkung in die zur aktuell eingeschlagenen Richtung entgegengesetzten Richtung erzeugt werden. Dies führt zu einer Vereinfachung der Berechnung der Tiefeninformationen.

### Zeichnung

Nachfolgend wird ein Ausführungsbeispiel der Erfindung unter Bezugnahme auf die begleitende Zeichnung im Detail beschrieben. In der Zeichnung ist:

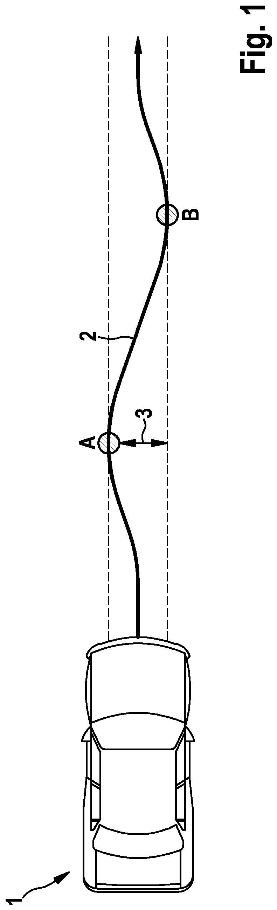

- Figur 1: eine Visualiserung des erfindungsgemäßen Verfahrens, bei dem eine sinusförmige Trajektorie gefahren wird.

### Ausführungsform der Erfindung

In Figur 1 ist ein Fahrzeug 1 dargestellt, das mit einer Kamera (nicht dargestellt) ausgestattet ist.

Die Kamera befindet sich bevorzugt an einem für das Fahrzeug optimalen Einbauort, benötigt aber auf jeden Fall eine freie Sicht in Fahrtrichtung des Fahrzeugs. Sobald sich das Fahrzeug bewegt, beginnt die Kamera mit der Aufnahme von Bildern der Umgebung. Da die Position der Aufnahme bekannt ist, kann daraus ein Tiefenmodell der Umgebung bestimmt werden. Führt das Fahrzeug nun erfindungsgemäß eine vorgegebene Trajektorie aus, in diesem Beispiel eine Sinuskurve, so erfährt die Kamera zusätzlich einen seitlichen Versatz 3. Um die Trajektorie optimal auszunutzen, muss ein Bild jeweils an den Extrempunkten A bzw. B aufgenommen werden. Werden aus diesen Bildern nach dem structure-from-motion-Prinzip Tiefeninformationen generiert, so bewirkt die seitliche Abweichung 3 der Kamera gegenüber einer reinen Vorwärtsbewegung eine deutliche Verbesserung der Qualität der Tiefeninformationen, die aus den Bildpunkten in der Mitte der Kamera gewonnen wurden.

## Patentansprüche

1. Verfahren zur Gewinnung von Tiefeninformationen mittels einer in einem Fahrzeug (1) angebrachten Kamera, umfassend die Schritte:
- Steuern des Fahrzeugs (1), so dass es einer definierten Trajektorie (2) folgt,
- Aufnehmen von mindestens zwei Bildern der Umgebung mit der Kamera an verschiedenen, definierten Punkten (A, B) der Trajektorie (2), und
- Berechnen von Tiefeninformationen aus mindestens zwei aufgenommenen Bildern,
**dadurch gekennzeichnet, dass**
- die Trajektorie (2) eine Sinus-Form aufweist, und
- die Kamera jeweils an den Extrempunkten (A, B) der Trajektorie (2) ein Bild der Umgebung aufnimmt.

2. Verfahren nach Anspruch 1, **dadurch gekennzeichnet, dass** das Fahrzeug (1) autonom fährt und der Trajektorie (2) autonom folgt.

3. Verfahren nach einem der vorhergehenden Ansprüche, **dadurch gekennzeichnet, dass** die Trajektorie (2) die Form einer S-Kurve aufweist.

4. Fahrzeug (1), umfassend eine Kamera und eine Tiefenbildberechnungseinheit, **dadurch gekennzeichnet, dass** das Fahrzeug (1) eingerichtet ist, einer definierten Trajektorie (2) zu folgen, um das Verfahren nach einem der vorgenannten Ansprüche durchzuführen.

## Claims

1. Method for obtaining depth information by means of a camera attached to a vehicle (1), comprising the following steps:
- controlling the vehicle (1) such that it follows a defined trajectory (2),
- recording at least two images of the surroundings using the camera at different, defined points (A, B) of the trajectory (2), and
- calculating the depth information from at least two recorded images,
**characterized in that**
- the trajectory (2) has a sinusoidal form and
- the camera in each case records an image of the surroundings at the extremal points (A, B) of the trajectory (2).

2. Method according to Claim 1, **characterized in that** the vehicle (1) drives autonomously and autonomously follows the trajectory (2).

3. Method according to one of the preceding claims, **characterized in that** the trajectory (2) has the form of an S-curve.

4. Vehicle (1) comprising camera and a depth image calculation unit, **characterized in that** the vehicle (1) is configured to follow a defined trajectory (2) in order to carry out the method according to one of the preceding claims.

## Revendications

1. Procédé d'acquisition d'informations de profondeur au moyen d'une caméra installée dans un véhicule (1), comprenant les étapes suivantes :
- commande du véhicule (1) de telle sorte qu'il suive une trajectoire (2) définie,
- enregistrement d'au moins deux images de l'environnement avec la caméra en différents points (A, B) définis de la trajectoire (2), et
- calcul d'information de profondeur à partir d'au moins deux images enregistrées,
**caractérisé en ce que**
- la trajectoire (2) présente une forme sinusoïdale, et
- la caméra enregistre une image de l'environnement respectivement aux points d'extrémité (A, B) de la trajectoire (2).

2. Procédé selon la revendication 1, **caractérisé en ce que** le véhicule (1) se déplace de manière autonome et suit la trajectoire (2) de manière autonome.

3. Procédé selon l'une des revendications précédentes, **caractérisé en ce que** la trajectoire (2) présente la forme d'une courbe en S.

4. Véhicule (1), comprenant une caméra et une unité de calcul d'image de profondeur, **caractérisé en ce que** le véhicule (1) est conçu pour suivre une trajectoire (2) définie afin de mettre en oeuvre le procédé selon l'une des revendications précédentes.
